# EUROPEAN PATENT APPLICATION

(11) **EP 2 400 390 A1**
(43) Date of publication of application: **28.12.2011**
(21) Application number: 11170695.8
(22) Date of filing: 21.06.2011
(51) Int. Cl.: G06F 9/46

(54) **Provision of services and libraries to remote clients**

(30) Priority: 25.06.2010 US 803402
(71) Applicant: Mitel Networks Corporation, Ottawa, ON K2K 2W7 (CA)
(72) Inventor: Soundrapandian, Suriyaprakash, Chandler, CA California 85286 (US)
(74) Representative: Venner Shipley LLP

(57) **Abstract**

A system and method for making a web service available to remote clients. In one illustrative embodiment, the web services are provided by a server. The server can use a metadata program to generate client side libraries that facilitate the development and maintenance of client side applications. A metadata binder on the server can be used to interface with the client side libraries. In operation, web services can be provided to mobile clients by generating Web Services Description Language function definitions. From those Web Services Description Language function definitions, Java objects can be created. Libraries can be generated from the objects for a plurality of platforms. The server can then communicate with the mobile clients operating on the plurality of platforms through the generated libraries.

## Description

This application generally relates to web services, and more particularly, to a server generating specific code libraries for a number of different platforms so that remote clients can access these libraries for web services while removing the need for special conversions by the mobile clients.

Web services are emerging as the next generation platform for distributed application software. These services are software, typically self-contained, self-describing and modular, that can be located and invoked across the web. Web services can perform functions ranging from simple requests to complex business processes. Once a web service is deployed, other applications and other web services can discover and invoke the deployed service. The platforms can enable application software to communicate synchronously or asynchronously over standard Internet protocols, such as HTTP (HyperText Transfer Protocol), SOAP (Simple Object Access Protocol), UDDI (Universal Description, Discovery and Integration), etc.

Web Services Description Language (WSDL) is an eXtensible Markup Language (XML) language that can be used to define a web service and specify a manner of communicating with the web service. XML has become a standard for inter-application communication. XML messages passing between applications can contain tags with self-describing text. This self-describing text can allow messages to be understandable not only to the applications, but to humans reading an XML document as well. XML is currently used to define standards for exchanging information in various industries. These document standards are available in various forms.

The processing of XML has become a standard function in many computing environments. When parsing XML, it is necessary to get data from the XML file and transform the data such that the data can be handled by a Java application or other application running the parser. Using WSDL compilers, the server and the client components can generate code and structures so they can interact as they make procedural calls using a SOAP/XML protocol over HTTP even though the components are physically separated.

This approach worked well when tools supporting libraries and abundant computational power were available, for example, in desktop application platforms. When exposing the same interfaces on mobile devices and the new web platforms on which they operated on, however, major development hurdles are presented. The SOAP/XML protocol generally requires heavy processing while mobile platforms prefer lightweight processing protocols such as a JavaScript Object Notation (JSON) protocol. Most of the platforms provide a Java Development Kit (JDK), but they are not the same and they include a stripped down version of Java. As a result, code libraries requiring advanced Java language functionalities typically do not work on these platforms.

Currently, the developer ends up spending time to manually write code for bypassing protocol processing and fetching required data from raw data. Further, developers have to create data structures by hand for messages and code for marshalling and unmarshalling structures to send over the network. The handwritten code structure also becomes a bottleneck for future changes to WSDL, as changes to WSDL require changes to manually written client code. The current implementation for web services therefore is inadequate.

The novel features believed to be characteristic of the application are set forth in the appended claims. In the descriptions that follow, like parts are marked throughout the specification and drawings with the same numerals, respectively. The drawing figures are not necessarily drawn to scale and certain figures can be shown in exaggerated or generalized form in the interest of clarity and conciseness. The application itself, however, as well as a preferred mode of use, further objectives and advantages thereof, will be best understood by reference to the following detailed description of illustrative embodiments when read in conjunction with the accompanying drawings, wherein:
Figure 1 represents a block diagram illustrating components for providing web services in accordance with one aspect of the present application;
Figure 2 depicts a block diagram showing a typical environment for multiple lightweight platforms receiving web services in accordance with one aspect of the present application;
Figure 3 is a block diagram showing illustrative communications between application servers and clients in accordance with one aspect of the present application;
Figure 4 provides a block diagram depicting a previous approach to interface with a client;
Figure 5 shows a block diagram representing illustrative components for web services in accordance with one aspect of the present application;
Figure 6 is a block diagram showing generalized components for the web services in accordance with one aspect of the present application;
Figure 7 represents a block diagram depicting an illustrative metadata binder to generate a lightweight protocol specific interface for the server in accordance with one aspect of the present application; and
Figure 8 depicts a block diagram showing exemplary metadata binders that communicate with different lightweight clients in accordance with one aspect of the present application.

The description set forth below in connection with the appended drawings is intended as a description of presently preferred embodiments of the application and is not intended to represent the only forms in which the present application can be constructed and/or utilized. The description sets forth the functions and the sequence of steps for constructing and operating the application in connection with the illustrated embodiments. It is to be understood, however, that the same or equivalent functions and sequences can be accomplished by different embodiments that are also intended to be encompassed within the scope of this application.

Generally described, the present application relates to web services provided to lightweight clients. In one illustrative embodiment, the web services are provided by a server that includes a metadata program and a metadata binder. The server can use the metadata program to generate client side libraries. The metadata binder can be used to interface with the client side libraries. In an operation, web services can be provided to remote clients by generating Web Services Description Language (WSDL) function definitions. From these WSDL function definitions, Java objects are created. The objects, in turn, are transformed into libraries by the metadata program for a plurality of platforms. The server can then communicate with the remote clients operating on the plurality of platforms through the generated libraries through a metadata binder.

The illustration provided above represents some embodiments. Those skilled in the relevant art will appreciate that other embodiments are included within the scope of the present application that use function definitions generated from business logic to generate separate code libraries for specific platforms. The web services are not limited to any specific language, such as Java. For example, the web services described herein can be extended to generate code for Objective-C on the iPhone® or for a Mitel® platform. Multiple platforms can also be used that include both desktop devices and mobile devices. These platforms can include, but are not limited to, BlackBerry® OS, Palm® OS, Windows Mobile®, AndroidTM, GWTTM, etc.

Using these web services, development of applications becomes easier. Typically, by providing multiple platforms and interfaces whereby the applications can interact with the web services, development time is reduced. Also, code generated by users of this approach is neater and manageable. Since the root of the generated code is WSDL, changes to WSDL for new functionalities would be available to client code.

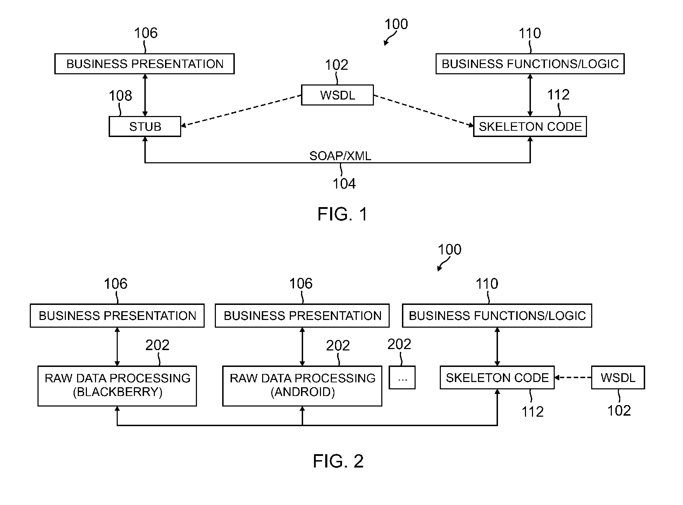

With reference now to Figure 1, a block diagram illustrating components for providing a web service 100 in accordance with one aspect of the present application is shown. Known to those skilled in the relevant art, a web service 100 can be used to set up business functions/logic 110 and provide them to a business presentation 106. Business functions/logic 110 can typically be provided by a server while the business presentation 106 can be executed on a client. The WSDL 102 can be read by the client to determine what operations are available on the server. Any special data types can be embedded in the WSDL 102 in the form of an XML schema. The client can then use SOAP/XML 104 to actually call one of the operations listed in the WSDL 102.

Using WSDL compilers, the server and the client can generate skeleton code 112 and stub structures 108 so they can interact through procedural calls even though the components are physically separated. The WSDL 102 can be used by both the server and the client by their compilers so that the stub 108 and skeleton 112 can be filled in. Traditionally, this approach worked well when tools, supporting libraries and abundant computational power were available. When platforms having less processing power were introduced, however, the complex protocols were no longer applicable to these new devices.

Figure 2 depicts a block diagram showing a typical environment for multiple lightweight platforms 202 receiving web services 100 in accordance with one aspect of the present application. The new web platforms 202 pose major development hurdles as SOAP/XML 104 typically requires heavy processing. These platforms 202 prefer lightweight processing protocols, like JSON, and most of these platforms 202 provide a Java Development Kit (JDK) that is a stripped down version of Java. This type of JDK often exists on the BlackBerry® OS, AndroidTM, GWTTM, etc.

Because of the limited capabilities on these platforms 202, code/libraries requiring advanced Java language functionalities often do not work on these platforms 202. The platform 202 provided built-in tool APIs differ across the platforms 202. Also the development tools and libraries are limited. These limitations make the development tedious and the developer ends up spending more time manually writing code for bypassing protocol processing and fetching required data from raw data and creating data structures by hand for messages and code for marshalling and unmarshalling structures to send over network. The handwritten code structure also becomes a bottleneck for future changes to WSDL 102 as changes to WSDL 102 require manually written client code.

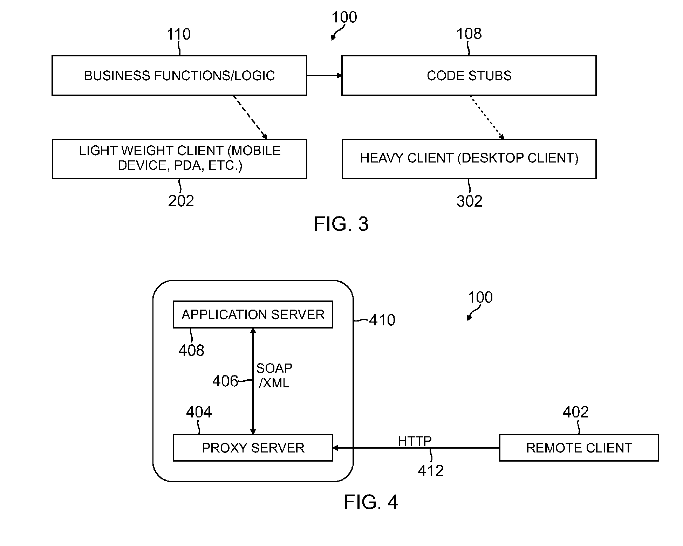

Figure 3 is a block diagram showing illustrative communications between application servers and clients in accordance with one aspect of the present application. The server can include business functions/logic 110. Typically, the business functions/logic 110 can be defined by the WSDL 102. Clients can take the form of either a light weight client 202 or a heavy client 302. In some embodiments, the light weight client 202 can be a mobile device, smart phone, personal digital assistant (PDA), etc. The heavy client 302 can be, but is not limited to, a desktop client.

Clients can use the server side business functions/logic 110 if the platform allows for the same level of defined coding structures. Many of the new mobile platforms 202 have a lighter weight development kit that support a limited set of coding functionalities and structures. In Figure 3, it shows the heavy client 302 with the available levels can share the objects and data structures with the business functions/logic 110. To do this, the function definitions fill in the code stubs 108.

The lighter weight client 202, on the other hand, is forced to use a different method. To use the existing method, applications for the lighter weight clients 202 should manage the data outside the server defined data structures. This management can use additional processing as well as a much lower tolerance for propagating changes from the server. For the desktop type clients 302 running on platforms having greater processing and development capacities, the object structure can be preserved down to the client. If the transport protocol is changed from the server, parts of the client applications that parse the protocol can be rewritten on the client side. This can make protocol changes difficult when separately developing the server and client sides.

Figure 4 provides a block diagram depicting an illustrative approach to interface with a remote client 402. The remote client 402 can be a mobile client or a desktop client. In this approach, the remote client 402 can communicate with a server 410 through a proxy server 404 using proprietary requests. The request can be provided over HTTP 412. The proxy server 404 serves the request by fetching the data from the application server 408 using the web service communication SOAP 406. This approach is cumbersome as any functional exposure of the server requires development of proprietary requests between the proxy server 404 and the remote client 402. Furthermore, this approach requires the development of the proxy server 404 and development in the remote client 402. Also with this approach, the remote clients 402 have to maintain their own representing data structures.

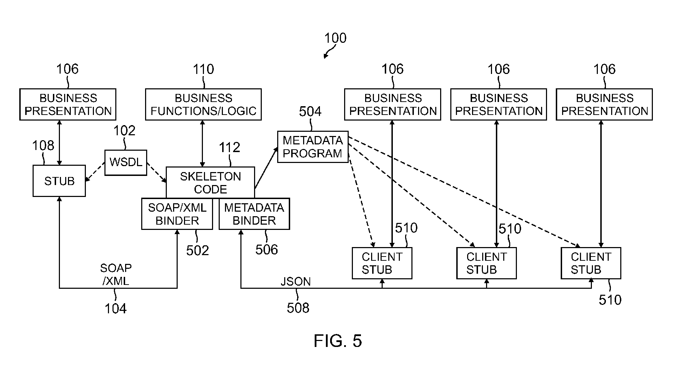

To overcome these challenges, Figure 5 shows a block diagram representing illustrative components for a web service 100 in accordance with one aspect of the present application. The web service 100 can provide code and structure to platforms that are capable of handling heavy processing loads as well as those platforms having lower processing capabilities. Those components described within the web service 100 are provided for illustrative purposes and should not be construed as the only implementation. One skilled in the relevant art will appreciate that the web service 100 can contain fewer or additional features.

As shown, the stub 108 and skeleton 112 can provide code and structure to platforms capable of handling heavy processing loads. The stub 108 and skeleton 112 can be generated using the WSDL 102. Through these function definitions, the SOAP/XML binder 502 can integrate the business functions/logic 110 with the business presentation 106. In typical embodiments, the business functions/logic 110 is located on a server while the business presentation 106 is provided on a client 302 that can process the heavy SOAP/XML protocol 104.

For light weight clients 202, additional components can be incorporated into the web service 100 so that the code and structure can be processed. In some embodiments, and as depicted in Figure 5, the web service 100 can incorporate a metadata program 504 and a metadata binder 506 to handle light weight clients 202. The metadata program 504 and the metadata binder 506 can be server modules. Generally speaking, the metadata program 504 can generate client side libraries to ease in the development and maintenance of client side applications and the metadata binder 506 can be used to interface with the client side libraries. The libraries provided by the server modules can define functions specifically for the level available at each of the specific target platforms of the light weight clients 202. As new platforms become available, new targets can be defined.

While the metadata program 504 and the metadata binder 506 are illustrated as separate components, those skilled in the relevant art will appreciate that the functions and features implemented thereon can be shared between them. In some embodiments, the metadata program 504 and the metadata binder 506 are provided outside the server. While in Figure 5 it is shown that only light weight clients 202 work with the metadata program 504 and metadata binder 506, heavy clients 302 can also use these libraries.

In operation, the libraries generated by the metadata program 504 can be used by the business presentation 106 through client stubs 510. This can eliminate the need for special conversions performed by the light weight client 202. When server changes are made, new libraries can be generated by the metadata program 504 and passed to the clients 202 through the metadata binder 506. Since these libraries are generated at the server, the client 202 is often not aware of the transport protocol that is used during runtime. In addition, changes in the protocol are automatically propagated using the new transport type.

In some embodiments, separate protocols can be used for separate client platforms. Through the metadata program 504, the WSDL compiler can generate code for the multiple lightweight clients 202 and their platforms. The code can be provided through a lightweight protocol, such as JSON 508, for the business presentations 106 on the lightweight clients 202 having less processing power. The communications between the server and client can use other protocols instead of the JSON protocol 508.

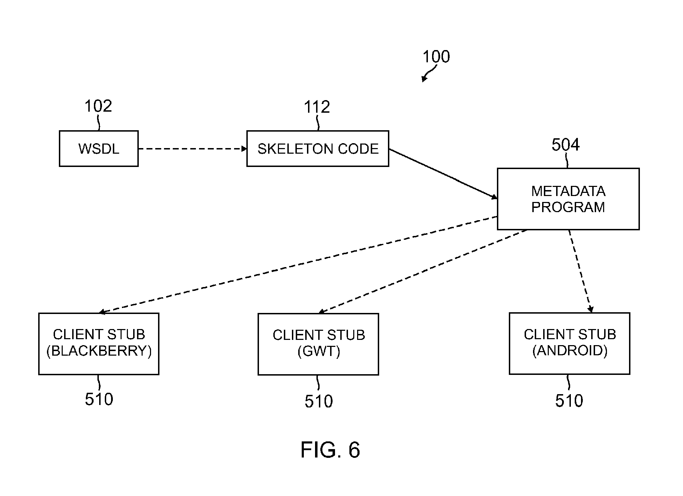

Figure 6 is a block diagram showing generalized components for the web service 100 in accordance with one aspect of the present application. The WSDL 102 can be used to define the web service 100 and specify a manner of communicating with the web service 100. The WSDL 102 can represent business functions/logic 110 that can be used by business presentations 106. The WSDL 102 can be used to generate objects, which can be in the form of Java objects.

The objects having structure and code can fill in the skeleton code 112 as shown in Figure 6. In turn, libraries can be generated using the metadata program 504 for a number of platforms from these objects. The libraries generated by the metadata program 504 can contain the server side defined functions specifically for the level available at each of the specific target platforms. These libraries can then be included in the client stub 510 as structure and code thus eliminating the need for special conversions done at the client side. The structure and code can be generated for the Apple iPhone OS, BlackBerry OS, Palm OS, Windows Mobile, Android, GWT, etc. By generating these libraries, the client 202 can alter or use the structure and code when implementing the web service 100. When server changes are made, new libraries can be generated and passed to the clients 202. Because the libraries are generated at the server, the client 202 often does not need to be aware of the transport protocol that is used during runtime. Changes in protocol are automatically propagated using the new transport type. This can allow separate protocols to be used for separate clients 202.

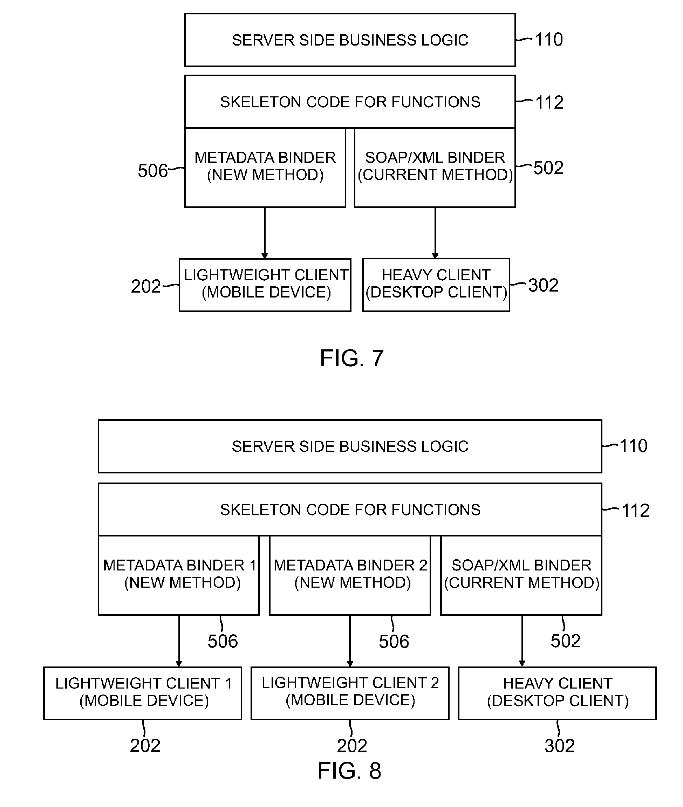

With reference now to Figure 7, a block diagram depicting an illustrative metadata binder 506 to generate a lightweight protocol specific interface for the server in accordance with one aspect of the present application is provided. Through the metadata program 504, a lightweight protocol specific interface for the server can be generated. Using the server side business functions/logic 110, skeleton code 112 for functions can be filled in. The generated code can be static in nature. Typically, the static code does not provide for advanced concepts, like reflection during runtime, which is not available on most mobile platform JDKs.

Known to those skilled in the relevant art, it would be easier to read the metadata and generate code with a familiar syntax than writing another a compiler to achieve the same. As shown in Figure 7, the structure and code generated by the metadata program 504 can be used to remove these issues within current systems.

The metadata binder 506 can be used to interface with the lightweight clients 202. This interface can use such protocols as JSON. Web service interfaces are also defined in the WSDL 102. Using the WSDL compilers, the server and the client components generate code and structures so they can interact as if they make procedural calls even though the components are physically separated. Through the metadata binder 506, when a call is received, the server can retrieve the objects through the generated libraries.

The libraries can be placed into client applications operated on the lightweight client 202. The client 202 can thereby access those functions defined on the server. The metadata binder 506 can allow communications between the client 202 and the server in a message format.

Figure 8 depicts a block diagram showing exemplary metadata binders 506 that communicate with lightweight clients 202 in accordance with one aspect of the present application. As shown, multiple binders can communicate with different platforms utilizing the generated libraries. Each of the heavy clients 302 or lightweight clients 202 can use different protocols.

In accordance with one aspect of the present application, a computer-implemented method for providing services to remote clients is presented. The method can include creating libraries from generated objects for a plurality of platforms. In addition, the method can include communicating with the remote clients operating on the plurality of platforms through the libraries.

In some embodiments, the method can further include reusing the libraries when new platforms are developed. In some embodiments, the method can further include recreating the libraries when the services are changed. In some embodiments, creating libraries from generated objects can include executing a metadata program. In some embodiments, the method can further include incorporating the libraries into a client application.

In some embodiments, communicating with the remote clients operating on the plurality of platforms can include using a lightweight protocol. In some embodiments, the lightweight protocol can be a JSON protocol. In some embodiments, communicating with the remote clients operating on the plurality of platforms can be performed though a metadata binder.

In accordance with another aspect of the present application, a web service system is provided. The web service system can include a generator for creating a library associated with a platform from Java objects corresponding with a web service. In addition, the web service system can include a web service interface for providing the library to a remote client application operating on the platform that requests the web service.

In some embodiments, the Java objects can be made by compiling an XML document. In some embodiments, the library can be included within the remote client application. In some embodiments, the generator can be written as a metadata program. In some embodiments, the library can include code and structure for the remote client application. In some embodiments, the remote client application operating on the platform can include a limited JDK or non Java environment.

In some embodiments, the remote client application can run on a mobile or web platform. In some embodiments, the web service interface can include a metadata binder for remote client applications. In some embodiments, the platform can be an Apple® iPhone® OS, Palm® OS, Windows Mobile®, AndroidTM, GWTTM, and BlackBerry® OS.

In accordance with yet another aspect of the present application, a server is provided. The server can include at least one processor and a memory operatively coupled to the processor, the memory storing program instructions that when executed by the processor, causes the processor to perform processes. These processes can include generating code libraries corresponding to specific platforms for a web service. In addition, the processes can include creating an interface for the web service. In response to a request received from a remote client at the interface, the processes can include communicating with the remote client using a code library dependent on a platform of the remote device.

In some embodiments, communicating with the remote client can include using a lightweight protocol. In some embodiments, wherein the memory storing program instructions, when executed by the processor, causes the processor to include the libraries in client applications removing special conversions performed by the remote client.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public regardless of whether such disclosure is explicitly recited in the claims.

## Claims

1. A computer-implemented method for providing services to remote clients comprising:
creating libraries from generated objects for a plurality of platforms; and c ommunicating with said remote clients operating on said plurality of platforms through said libraries.

2. The computer-implemented method of claim 1, further comprising reusing said libraries when new platforms are developed.

3. The computer-implemented method of claim 1 or claim 2, further comprising recreating said libraries when said services are changed.

4. The computer-implemented method of any preceding claim , wherein creating libraries from generated objects comprises executing a metadata program.

5. The computer-implemented method of any preceding claim , further comprising incorporating said libraries into a client application.

6. The computer-implemented method of any preceding claim , wherein communicating with said remote clients operating on said plurality of platforms comprises using a lightweight protocol, for instance a JavaScript Object Notation protocol, or alternatively wherein communicating with said remote clients operating on said plurality of platforms is performed though a metadata binder.

7. A web service system comprising:
a generator for creating a library associated with a platform from Java objects corresponding with a web service; and
a web service interface for providing said library to a remote client application operating on said platform that requests said web service.

8. The web service system of claim 7, wherein said Java objects are made by compiling an Extensible Markup Language document.

9. The web service system of claim 7 or claim 8, wherein said library is included within said remote client application and/or wherein said generator is written as a metadata program and/or wherein said library comprises code and structure for said remote client application.

10. The web service system of any of claims 7 to 9, wherein said remote client application operating on said platform includes a limited Java Development Kit (JDK) or non Java environment, and optionally wherein said remote client application runs on a mobile or web platform.

11. The web service system of any of claims 7 to 10, wherein said web service interface comprises a metadata binder for remote client applications.

12. The web service system of any of claims 9 to 11, wherein said platform is selected from the group consisting of an Apple® iPhone® OS, Palm® OS, a Windows Mobile®, an AndroidTM, a GWTTM, and a BlackBerry® OS.

13. A server configured:
to generate code libraries corresponding to specific platforms for a web service;
to create an interface for said web service; and
to in response to a request received from a remote client at said interface, communicate with said remote client using a code library dependent on a platform of said remote device.

14. The server of claim 13, wherein communicating with said remote client comprises using a lightweight protocol.

15. The server of claim 13 or claim 14, wherein said memory storing program instructions, when executed by said processor, causes said processor to include said libraries in client applications removing special conversions performed by said remote client.
